# EUROPEAN PATENT APPLICATION

(11) **EP 0 835 738 A1**
(43) Date of publication of application: **15.04.1998**
(21) Application number: 97113026.5
(22) Date of filing: 29.07.1997
(51) Int. Cl.: B29C 59/02

(54) **Flexible tube decorative method**

(30) Priority: 13.09.1996 US 713823
(71) Applicant: COURTAULDS PACKAGING INC., Florence, KY 41042 (US)
(72) Inventor: Kieras, Ronald E., Woodstock, IL 60098 (US)
(74) Representative: Frankland, Nigel Howard

(57) **Abstract**

A decorative feature(12) is formed in the side wall(S) of a thermoplastic tube(1) formed from a longitudinally stretched, extruded, thermoplastic cylinder(2) by heating a selected portion of the side wall of the tube, disposed on a mandrel(5), to a temperature sufficient to soften the selected portion to accept formation of a decorative feature therein. The heated selected portion is then contacted with a die(9) carrying the desired decorative feature(10) so as to form the decorative feature(12) and the side wall then cooled. Heating of the selected portion of the side wall may be by a hot fluid or a hot die and, if desired, a vacuum may be used to form a raised feature.

## Description

**THE PRESENT INVENTION** relates to a method of producing a decorative feature in the side wall of a thermoplastic tube, which tube is formed from a longitudinally stretched, extruded, thermoplastic cylinder.

Squeeze tubes formed from thermoplastic materials are extensively used in the packaging of consumer products such as cosmetics, toothpaste, shampoo, foodstuffs and the like. Often such tubes are formed from an extruded cylinder of a thermoplastic material that has been extruded and longitudinally stretched in the axial direction. The longitudinally stretched, extruded, thermoplastic cylinder is then cut to length for use in making tubes and a head formed on the tube at one end. Examples of the formation of a head on a tube are described, for examples, in US-A-3,047,910 and in US-A-5,069,856.

Since the squeeze tubes are used for packaging of retail products, the formation of decorative features as well as other indicia on the tubes is very important so that the tube is pleasing to the eye. Various decorative processes have been developed, such as printing on the tube surface, application of a decorative foil in combination with printed matter, such as described in US-A-4,484,970.

It is an object of the present invention to provide a method of forming a tactile decorative feature on the side wall of a tube formed from a longitudinally stretched extruded, thermoplastic cylinder.

It is another object of the present invention to provide a method of forming a decorative feature on the side wall of a tube where the decorative feature may overlie an existing decoration or indicia already present on the side wall of the tube.

According to this invention there is provided a method of producing a decorative feature in the side wall of a thermoplastic tube intermediate two opposed ends thereof, said tube being formed from a longitudinally stretched, extruded, thermoplastic cylinder, comprising providing a longitudinally stretched, extruded, thermoplastic cylinder on a mandrel, heating a selected portion only of the side wall of said cylinder to a temperature sufficient to soften said selected portion to accept formation of a decorative feature, contacting said heated selected portion of said side wall with a die so as to produce said decorative feature in said side wall, and cooling said heated selected portion to ambient temperature such that said decorative feature is retained in said side wall.

In one embodiment said thermoplastic tube is comprised of high density polyethylene and said selected portion of the side wall is heated to a temperature of between 112.7 to 132.2°C (235-270°F).

Alternatively said thermoplastic tube is comprised of low density polyethylene and said selected portion of the side wall is heated to a temperature of between 79.5 to 98.8°C (175-210°F).

According to another aspect of this invention there is provided a method of producing a decorative feature in the side wall of a thermoplastic tube intermediate two opposed ends thereof, said tube being formed from low density polyethylene as a longitudinally stretched, extruded, low density polyethylene cylinder having a wall thickness of between about 0.254 to 0.127 mm (0.010-0.050 inch) comprising providing a longitudinally stretched, extruded, low density polyethylene cylinder on a mandrel, heating a selected portion only of the side wall of said cylinder to a temperature of between about 79.5 to 98.8°C (175-210°F) sufficient to soften said selected portion to accept formation of a decorative feature, contacting said heated selected potion of said side wall with a die so as to produce said decorative feature in said side wall, and cooling said heated selected portion to ambient temperature such that said decorative feature is retained in said side wall.

According to a further embodiment of the invention a method of producing a decorative feature in the side wall of a thermoplastic tube intermediate two opposed ends thereof, said tube being formed from high density polyethylene as a longitudinally stretched, extruded, high density polyethylene cylinder having a wall thickness of between about 0.254 to 0.127 mm (0.010-0.050 inch) comprising providing a longitudinally stretched, extruded, high density polyethylene cylinder on a mandrel, heating a selected portion only of the side wall of said cylinder to a temperature of between about 112.7 to 132.2°C (235-270°F) sufficient to soften said selected potion to accept formation of a decorative feature, contacting said heated selected portion of said side wall with a die so as to produce said decorative feature in said side wall, and cooling said heated selected portion to ambient temperature such that said decorative feature is retained in said side wall.

Advantageously said heating is effected by applying heat to said selected portion only of said side wall by application of a heated fluid thereto, and contacting the heated selected portion with a die carrying said decorative feature.

Conveniently said heating is effected by contacting said selected portion of the side wall with a heated die carrying said decorative feature.

Preferably after contacting said heated selected portion of said side wall with said die, a vacuum is applied through the die to the heated selected portion.

A preferred embodiment of the invention comprises a method for producing a decorative feature in the side wall of a thermoplastic tube, the tube being formed from a longitudinally stretched, extruded, thermoplastic cylinder. A longitudinally stretched, extruded, thermoplastic tube is provided on a mandrel and a selected portion of the side wall of the tube is heated to a temperature sufficient to soften the selected portion to accept formation of a decorative feature therein. The heated selected portion is then contacted with a die carrying the desired decorative feature so as to form the decorative feature into the side wall and the heated selected portion, with the decorative feature, is then cooled to ambient temperature such that the decorative feature is retained int he side wall of the tube.

The heating of the selected portion of the side wall of the tube may be effected by contacting the side wall with a heated die or by heating the side wall by application of a hot fluid, or by a combination of those heating formats. The die used may be an embossing die, which will impress a decorative feature into the thermoplastic side wall or, a die using a vacuum may be used to form a raised decorative feature into the thermoplastic side wall.

The present method will be more fully understood by reference to the following description and the accompanying drawings of embodiments thereof, wherein:
FIGURE 1 is a schematic illustration of an embodiment of the method of the present invention,
FIGURE 2 is a cross-sectional view of a portion of a side wall of a tube decorated according to the present method, and
FIGURE 3 is a plan view of the side wall of the tube illustrated in Figure 2.

The presently described method provides for the formation of a decorative feature in the side wall of a tube formed from a longitudinally stretched, extruded, thermoplastic cylinder.

The tube that is decorated by the method is formed from a longitudinally stretched, extruded, thermoplastic cylinder formed from a thermoplastic material such as high density polyethylene, low density polyethylene, polypropylene, polyvinyl chloride, or the like. The longitudinally stretch, extruded, thermoplastic cylinder from which the tube is formed is produced from a tubular extrusion which has a wall thickness in the molten state that is two to three times the wall thickness of the final cooled extruded thickness. Such a tubular extrusion is formed by extruding the thermoplastic material from an extrusion annulus in a molten state and stretching the hot tubular form, in the direction of the longitudinal axis thereof, into a cylinder having a wall thickness one-half to one-third, or less, than the extrusion annulus. Such extrusion and stretching techniques are known, and further described in U.S.-A-5,069,856.

Tubes formed from such longitudinally stretched, extruded thermoplastic cylinder will generally have a side wall of a thickness of about 0.254 to 0.127 mm (0.010-0.050 inch), preferably about 0.030 to 0.050 mm (0.012-0.020 inch).

In the method, a decorative feature is provided in the side wall of a thermoplastic tube by heating a selected portion of the outer side wall and contacting the heated selected portion with a die. The heating maybe effected by application of a hot fluid, such as hot air, to the selected portion of the side wall or by contacting the heated selected portion of the side wall with a heated die. The decorative feature may also be formed by heating the selected portion of the side wall by application of a hot fluid and contacting the heated selected portion with a die and applying a vacuum to the heated selected portion to form a decorative feature thereon.

In the method, the longitudinally stretched, extruded, thermoplastic cylinder is formed from the aforementioned thermoplastic and the temperature to which the selected portion is heated will vary dependant upon the particular thermoplastic. For example, if the thermoplastic is a low density polyethylene, identified by ASTM standards as having a density of between about 0.910 to 0.925 g/cc, the selected portion should be heated to a temperature of between about 79.5 to 98.8°C (175°-210°F) while if the thermoplastic is a high density polyethylene, identified by ASTM standards as having a density of between about 0.941 to 0.959 g/cc, the selected portion should be heated to a temperature of between about 112.7 to 132.2°C about (235°-270°F). The pressure of contact and time of contact of the die, as well as the specific temperatures used will depend on the thermoplastic material of the tube and are readily determined to produce the desired displacement. Such temperatures are selected by determining the temperature at which the outer surface of the tube will be softened to an extent to enable displacement of selected portion thereof to form the tactile decorative feature thereon.

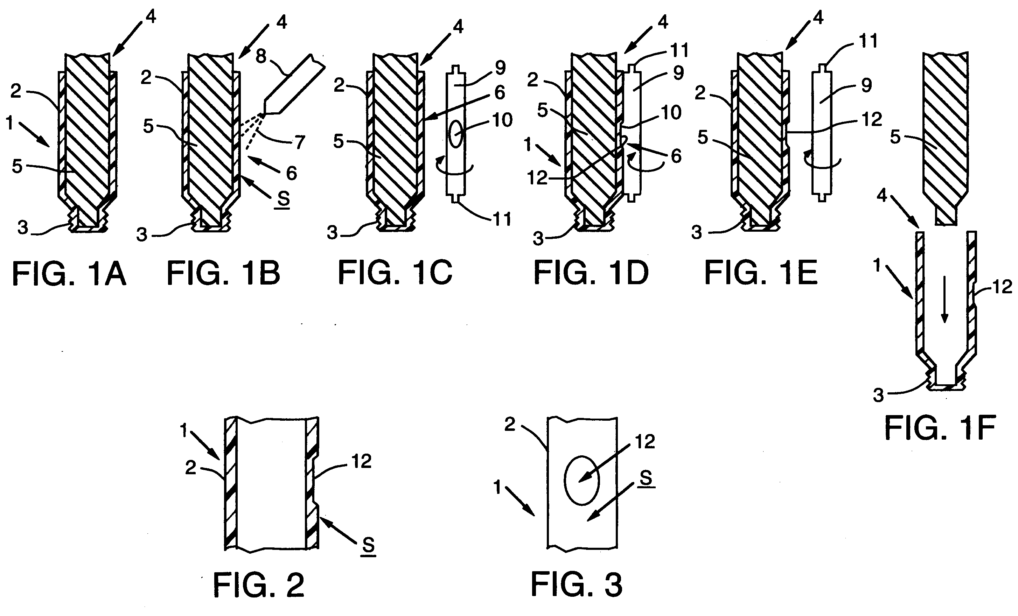

Referring now to the drawings, Figure 1 schematically illustrates an embodiment of the present invention. In (A) of Figure 1, a tube 1 formed of a longitudinally stretched, extruded thermoplastic cylinder 2 having a head 3 at one end and an open opposite end 4 is disposed on a mandrel 5. As shown at (B), a selected portion 6 only of the outer surface S of the cylinder 2 is heated, such as by application of a flow of heated fluid 7, preferably hot air, from a source 8. A die 9, which die 9 may be a flat or concave shape that reciprocates towards and away from the tube, but is preferably a roller that is rotated as shown by the arrow, carrying a decorative feature 10, is then brought into close proximity to the tube 1 as illustrated at (c), the die preferably being rotatable on a shaft 11. After heating of the selected portion 6 of cylinder 2 to a predetermined temperature, sufficient such that contact with the die 9 will displace a section of the heated selected portion, the heated die is contacted with the heated selected portion so as to produce a decorative feature 12 in the cylinder wall that corresponds to the decorative feature 10 on the die 9 (D). The die 9 is then removed from contact with the cylinder 2 (E) and the selected heated portion with the decorative feature 12 is cooled. As illustrated (F), the tube thermoplastic tube 1 is then removed from the mandrel 5. Figure 2 illustrates a section of a tube 1 decorated by the present method, where a decorative feature 12 is produced int he side wall of the cylinder 2 by displacing a section of the outer surface S of the cylinder 2. Figure 3 illustrates a plan view of the tube 1 of Figure 2 showing a decorative feature 12, an oval, formed in the side wall of the cylinder 2.

In another embodiment, the selected portion of the side wall of the tube may be heated to the desired temperature and a die contacted with the outer surface of the tube, with a vacuum applied through the die to the heated selected portion of the side wall of the tube to form a raised decorative feature therein

By displacement of a portion of the heated selected portion to form a decorative feature, a textured or tactile, i.e. perceptible by touch, surface feature is formed.

The features disclosed in the foregoing description, in the following Claims, and/or in the accompanying drawings may, both separately and in combination, be material for realising the invention in diverse forms thereof.

## Claims

1. A method of producing a decorative feature(12) in the side wall of a thermoplastic tube(1) intermediate two opposed ends thereof, said tube being formed from a longitudinally stretched, extruded, thermoplastic cylinder(2), comprising providing a longitudinally stretched, extruded, thermoplastic cylinder(2) on a mandrel(5), heating a selected portion only of the side wall(S) of said cylinder(2) to a temperature sufficient to soften said selected portion to accept formation of a decorative feature, contacting said heated selected portion of said side wall with a die(9) so as to produce said decorative feature in said side wall, and cooling said heated selected portion to ambient temperature such that said decorative feature(12) is retained in said side wall.

2. The method as defined in Claim 1 wherein said thermoplastic tube(1) is comprised of high density polyethylene and said selected portion of the side wall is heated to a temperature of between 112.7 to 132.2°C (235-270°F).

3. The method as defined in Claim 1 wherein said thermoplastic tube(1) is comprised of low density polyethylene and said selected portion of the side wall is heated to a temperature of between 79.5 to 98.8°C (175-210°F).

4. A method of producing a decorative feature(12) in the side wall of a thermoplastic tube(1) intermediate two opposed ends thereof, said tube formed from low density polyethylene as a longitudinally stretched, extruded, low density polyethylene cylinder having a wall thickness of between about 0.254 to 0.127 m (0.010-0.050 inch) comprising providing a longitudinally stretched, extruded, low density polyethylene cylinder on a mandrel(5), heating a selected portion only of the side wall(S) of said cylinder(2) to a temperature of between about 79.5 to 98.8°C (175-210°F) sufficient to soften said selected portion to accept formation of a decorative feature(12), contacting said heated selected potion of said side wall(S) with a die(9) so as to produce said decorative feature(12) in said side wall, and cooling said heated selected portion to ambient temperature such that said decorative feature(12) is retained in said side wall(S).

5. A method of producing a decorative feature in the side wall of a thermoplastic tube(1) intermediate two opposed ends thereof, said tube formed from high density polyethylene as a longitudinally stretched, extruded, high density polyethylene cylinder(2) having a wall thickness of between about 0.254 to 0.127 mm (0.010-0.050 inch) comprising providing a longitudinally stretched, extruded, high density polyethylene cylinder(2) on a mandrel(5), heating a selected portion only of the side wall(S) of said cylinder(2) to a temperature of between about 112.7 to 132.2°C (235-270°F) sufficient to soften said selected potion to accept formation of a decorative feature(12), contacting said heated selected portion of said side wall(S) with a die(9) so as to produce said decorative feature(12) in said side wall, and cooling said heated selected portion to ambient temperature such that said decorative feature(12) is retained in said side wall(S).

6. The method as defined in any one of the preceding Claims wherein said heating is effected by applying heat to said selected portion only of said side wall(S) by application of a heated fluid thereto, and contacting the heated selected portion with a die(9) carrying said decorative feature.

7. The method as defined in any one of Claims 1 to 3 wherein said heating is effected by contacting said selected portion of the side wall(S) with a heated die(9) carrying said decorative feature(10).

8. The method as defined in any one of the preceding Claims wherein, after contacting said heated selected portion of said side wall(S) with said die(9), a vacuum is applied through the die to the heated selected portion.
